# EUROPÄISCHE PATENTSCHRIFT

(11) **EP 0 346 418 B1**
(45) Veröffentlichungstag und Bekanntmachung des Hinweises auf die Patenterteilung: **26.05.1993**
(21) Anmeldenummer: 89900248.9
(22) Anmeldetag: 20.12.1988
(51) Int. Cl.: C09K 17/00, C08B 15/00

(54) **BODENVERBESSERUNGSMITTEL**
SOIL-CONDITIONING MATERIAL
AGENT AMELIORANT

(30) Priorität: 30.12.1987 DE 3744569
(43) Veröffentlichungstag der Anmeldung: 20.12.1989
(73) Patentinhaber: GESELLSCHAFT FÜR GNOTOBIOTECHNIK UND BIOFORSCHUNG MBH, D-30989 Gehrden (DE)
(72) Erfinder: BERTRAM, Kurt, D-3220 Alfeld/Leine (DE)
(74) Vertreter: Hagemann, Heinrich, Dr.rer.nat., Dipl.-Chem.
(86) Internationale Anmeldenummer: EP8801183
(87) Internationale Veröffentlichungsnummer: WO8906263

(56) Entgegenhaltungen:
- EP-A- 0 202 137
- DE-A- 1 076 716
- GB-A- 862 712

## Beschreibung

Die Erfindung betrifft ein Bodenverbesserungsmittel mit einem Gehalt an einem bodenverträglichen Elektrolyten und Zucker sowie dessen Verwendung zur Erhöhung der Bodenionisation und des Ertrags an Kulturpflanzen.

Die DE-OS 25 00 004 betrifft ein Verfahren zur Herstellung eines Bodenverbesserungsmittels, das organische Stoffe enthält. Die organischen Stoffe sollen in feuchtem Zustand eine Kolloidform liefern, die geeignet ist, energiespeichernde Verbindungen einzuschließen, womit eine allmählich eintretende Wechselwirkung mit dem lebenden Boden eingeleitet und dadurch die Ausnutzung biologisch aktivierender Vorgänge verbessert wird. Als organischer Stoff wird unter anderem Rohrzucker angegeben. Des weiteren soll es zweckmäßig sein, Phosphorsäure beizumischen.

Die DE-PS 25 37 617 befaßt sich mit einem Verfahren zur Herstellung eines Bodenverbesserungsmittels durch Mischen von technischer Phosphorsäure mit Harnstoff, wobei als weiterer Bestandteil ein Saccharid zugemischt wird. Dieses Mittel wird als wässrige Mischung auf den Boden aufgebracht.

Die DE-A-1 076 716 betrifft Bodenverbesserungsmittel, die aus Dextran und einem Polyelektrolyt hergestellt werden. Es wird eine Mischung aus 50% Elektrolyt und 50% Dextran mit einem niedrigen Molekulargewicht von 5000 bis 50000 verwendet. Dabei ist eine gleiche Stabilitätserhöhung wie bei Verwendung des Polyelektrolyts alleine gewährleistet.

Die GB-A-0 862 712 beschreibt ein, auch für Landwirtschaftsböden geeignetes, ähnliches Bodenverbesserungsmittel aus Dextran und einem Polyelektrolyt, wobei ein synergistischer Effekt gegenüber der Verwendung von Dextran oder Elektrolyt allein auftritt.

Von den oben beschriebenen Bodenverbesserungsmitteln liegen keine konkreten Zahlen vor, die ihre Wirksamkeit belegen. Die nachfolgend beschriebene Erfindung zeigt, daß die wünschenswerte Verbesserung der Bodenqualität und die Steigerung des Ertrags der Kulturpflanzen nicht allein durch den Einsatz von Rohrzucker erreicht wird. Vielmehr lassen sich durch die Auswahl eines speziellen Saccharids überraschende Vorteile erzielen.

Der Erfindung lag daher die Aufgabe zugrunde, die bekannten Bodenverbesserungsmittel so weiterzubilden, daß sie eine verbesserte Effizienz im Boden zeigen und dies auch durch eine merkliche Steigerung des Ertrags an Kulturpflanzen nachgewiesen werden kann.

Erfindungsgemäß wird diese Aufgabe dadurch gelöst, daß das Bodenverbesserungsmittel den bodenverträglichen Elektrolyten und einen Invertzucker in einem Verhältnis von etwa 20 : 1 bis 1 :10 enthält, wobei der Invertzucker invertierter Rohrzucker eines Inversionsgrades von etwa 55 bis 75% ist. Das Wesen des erfindungsgemäßen Bodenverbesserungsmittels liegt in der Kombination eines Invertzuckers und eines bodenverträglichen Elektrolyten in einem bestimmten Gewichtsverhältnisbereich. Unter "Invertzucker" soll im Sinne der Erfindung das unter Inversion des optischen Drehsinnes entstehende Gemisch aus Glucose und Fructose bezeichnet werden, das sich bildet, wenn man Rohr- oder Rübenzucker (Saccharose) der Einwirkung von Säuren und/oder Invertase aussetzt, und das z.B. dem Honig und dem Kunsthonig ihre Süße verleiht. Im Rahmen der Erfindung weist der Invertzucker einen Inversionsgrad von etwa 55 bis 75%, insbesondere 60 bis 70% und ganz besonders etwa 66% auf.

Neben dem Invertzucker der oben beschriebenen Art muß das erfindungsgemäße Bodenverbesserungsmittel einen Elektrolyten enthalten, der für eine besondere Ionisation des behandelten Bodens sorgt. Dieser Elektrolyt setzt sich vorzugsweise aus einem Alkalimetall einer bodenverträglichen organischen Säure, wie Ameisensäure, Essigsäure und Propionsäure, zusammen. Bevorzugt wird im Rahmen der Erfindung Natriumacetat.

Dem erfindungsgemäßen Bodenverbesserungsmittel können weitere Additive einverleibt werden, die zusätzliche Effekte auf den Boden ausüben, wie beispielsweise die Additive, die in den vorstehend erörterten Bodenverbesserungsmitteln des Standes der Technik enthalten sind.

Die erwähnten wesentlichen Bestandtele des erfindungsgemäßen Bodenverbesserungsmittels (Elektrolyt/Invertzucker) sollten in diesem in einem Gewichtsverhältnis von etwa 20 : 1 bis 1 : 10, insbesondere von etwa 10 : 1, enthalten sein. Bei der praktischen Anwendung werden sie vorzugsweise in einer wässrigen Lösung einer Konzentration von etwa 1 bis 0,01 Gew.-%, insbesondere etwa 0,1 Gew.-% auf den zu behandelnden Boden aufgetragen. Zu einem vorteilhaften erfindungsgemäßen Bodenverbesserungsmittel gelangt man beispielsweise dann, wenn etwa 10 Gew.-Teile einer wässrigen 25 gew.-%igen Essigsäure, etwa 70 Gew.-Teile einer etwa 50 gew.-%igen Natronlauge und etwa 20 Gew.-Teile Invertzucker miteinander vermischt werden, vorzugsweise unter Kühlen, und danach eine Verdünnung in den oben erwähnten gewichtsprozentualen Bereich mit Wasser eingestellt wird.

Das erfindungsgemäße Bodenverbesserungsmittel bewirkt eine günstige Vegetationsphase und durch die Erhöhung der Ionisation des Bodens eine Verbesserung der Assimilation der Kulturpflanzen, wobei der Invertzuckeranteil von den Pflanzen in vorteilhafter Weise aufgenommen und dadurch die Assimilation gesteigert wird. Auf die Bedeutung der Ionisation des Bodens geht beispielsweise König, Kernforschungszentrum Karlsruhe in "Umschau" 1986, Heft 2, S. 109/110 ein. Durch die Anwendung des wässrigen Bodenverbesserungsmittels werden vermutlich die Bodenmikroben bzw. Mikropilze aktiviert, die so zu einer verbesserten Vegetation der Kulturböden beitragen. Durch Feldversuche wurde nachgewiesen, daß durch die Erhöhung der Ionisation bzw. Erdelektrizität die Ernteerträge bei speziellen Kulturpflanzen bis zu etwa 30 bis 40% stiegen, wobei die Einsaat um etwa 45% herabgesestzt werden konnte. Im Falle von Doppelnull-Raps konnten die toxischen Stoffe von Glucosinolaten in der Rapsfrucht auf ein Minimum von etwa 7,9 Mikromol gesenkt werden, während die normalen Werte bei etwa 20 bis 25 Mikromol liegen.

Das erfindungsgemäße Bodenverbesserungsmittel steigert nicht nur die Erträge, sondern leistet in der Hauptsache einen Beitrag zum Umweltschutz durch Einsparung des Düngemittels (Schonung des Grundwassers / Verhinderung des Ozonabbaus), Reaktivierung des Bodens, Verhinderung des Wildsterbens bei der Kulturpflanze Doppelnull-Raps, Dekontamination (Radioaktivität). Es gibt demzufolge dem Boden seine Regenerierfähigkeit zurück und wirkt im Boden als Elektrolyt und aktiviert kranke und schwache Böden. Darüber hinaus neutralisiert es Säuren in allen Bodenarten, speziell bei ariden Sandböden und dient der Beseitigung von Schwefelsäure (SO₂) und Stickoxiden. Es schafft durch eine verbesserte Bioammoniaksynthese die Möglichkeit der Aufnahme von Nährstoffen für Mikroben und Haarwurzeln zur Verbesserung des Bodenbiotops. Ferner schafft es durch Bildung von Auxinen eine günstige Gaskonstante im Baum- und Wurzelbereich und beeinflußt darüber hinaus die gesamte Vegetation positiv. Es hat einen hohen Wirkungsgrad und erzeugt extremes Wachstum. Es erhöht die Ernteerträge und verbessert die Qualität, es reduziert die Düngerzugabe, mindert die Toxine im Erdboden, in Seen und in Flüssen und schützt darüber hinaus die Umwelt bzw. verbessert sie. Es ist in verdünnter Form für Insekten und Kleinlebewesen unschädlich. Es ist allerdings zu bedenken, daß es nicht mit den Schleimhäuten oder Augen der es einsetzenden Personen in Berührung kommen sollte.

Im Ergebnis ist demzufolge das von der Erfindung gesetzte Ziel in einem überraschend günstigen Ausmaße erreicht worden. So gelang es in langjährigen Versuchen ein Bodenaktivierungsmittel zu entwickeln, daß auch das Waldsterben vermindert und zur Gesundung erkrankten Baumbestandes beiträgt. Zahlreiche Versuche außerhalb des Laborbereiches in Niedersachsen und Nordrhein-Westfalen bewiesen, daß es bereits erkrankten Boden sicht- und meßbar gesunden läßt.

Nachfolgend soll die Erfindung anhand eines Beispiels, das auf einen Feldversucht mit Doppelnull-Raps abstellt, noch näher erläutert werden.

### Beispiel (Feldversuch)

1986 wurde unter Geheimhaltung ein Versuch mit 00-Raps wie folgt durchgeführt: Es wurden zwei Versuchsfelder mittlerer Qualität ausgesucht, wobei beide Felder eine Größe von etwa 4 ha hatten und direkt nebeneinander lagen. Nach dem Auflaufen der Keimlinge waren am 13. September 1986 mittels fahrbarer Druckspritze 1,6 kg des Bodenverbesserungsmittels (20 Gew.-Teile Invertzucker (Inversionsgrad: 66%) vermischt mit 70 Gew.-Teilen wässriger 50%iger Natronlauge und 10 Gew.-Teilen wässriger 25%iger Essigsäure) mit 1600 l Wasser auf die Einsaat des einen Feldes gesprüht (400 l/ha). Am 20. März 1987 wurde beobachtet, daß die Pflanzen gut überwintert und keine Schäden durch Frost oder Schadstoffe erlitten hatten. Am 7. Juli 1987 wurde extremes Wachstum bei den Pflanzen auf dem behandelten Feld festgestellt. Die Größe betrug mehr als 2 m, die Stengeldicke über 2 cm.

Bei den beiden Versuchsfeldern ergab sich folgende vergleichende Gegenüberstellung:

| mit Bodenverbesserungsmittel* | | ohne Bodenverbesserungsmittel* |
|---|---|---|
| Saatgut (Lidora) | | |
| Pflanzenhöhe | 200 cm | 120cm |
| Stengeldicke | 2 cm | 1,5 cm |
| Schotenlänge | 10 cm | 6 cm |
| Anzahl d. Körner | 35 | 19 |
| Ernteertrag | 40 dz/ha | 27,5 dz/ha |

| | | |
|---|---|---|
| * Als Düngemittel war des weiteren Kalkamonsalpeter verabreicht worden. | | |

## Patentansprüche

1. Bodenverbesserungsmittel mit einem Gehalt an einem bodenverträglichen Elektrolyten und Zucker, dadurch **gekennzeichnet**, daß es den Elektrolyten und einen Invertzucker in einem Verhältnis von etwa 20 : 1 bis 1 : 10 enthält, wobei der Invertzucker invertierter Rohrzucker eines Inversionsgrades von etwa 55 bis 75% ist.

2. Bodenverbesserungsmittel nach Anspruch 1, dadurch gekennzeichnet, daß der Elektrolyt Natriumacetat ist.

3. Bodenverbesserungsmittel nach Anspruch 1, dadurch gekennzeichnet, daß der Inversionsgrad etwa 60 bis 70% beträgt.

4. Bodenverbesserungsmittel nach einem der vorhergehenden Ansprüche, dadurch gekennzeichnet, daß es in wäßriger Form vorliegt und bezüglich der Kombination Bodenelektrolyt/Invertzucker etwa 0,01 bis 1,0 gew.-%ig, insbesondere etwa 0,1 gew.-%ig, ist.

5. Verwendung des Bodenverbesserungsmittels nach einem der vorhergenden Ansprüche zur Erhöhung der Bodenionisation und des Ertrags an Kulturplanzen.

## Claims

1. A soil-conditioning material with a content of soil-compatible electrolytes and sugar, characterised in that it contains the electrolytes and an invert sugar in a ratio of approximately 20:1 and 1:10, whereby the invert sugar is an inverted raw sugar with a degree of inversion of approximately 55 to 75%.

2. A soil-conditioning material according to Claim 1, characterised in that the elctrolyte is sodium acetate.

3. A soil-conditioning material according to Claim 1, characterised in that the degree of inversion is approximately 60 to 70%.

4. A soil-conditioning material according to any one of the above Claims, characterised in that it is in an agueous form and that the soil electrolyte/invert sugar combination constitutes approximately 0.01 to 1.0% by weight, and preferably approximately 0.1% by weight.

5. The use of the soil-conditioning material according to any one of the above Claims to increase soil ionisation and the yield of cultivated plants.

## Revendications

1. Composition d'amélioration du sol ayant une teneur en un électrolyte compatible avec le sol et en sucre, caractérisée en ce qu'elle contient l'électrolyte et un sucre inverti dans un rapport d'environ 20:1 à 1:10, le sucre inverti consistant en saccharose inverti ayant un degré d'inversion d'environ 55 à 75 %.

2. Composition d'amélioration du sol suivant la revendication 1, caractérisée en ce que l'électrolyte est l'acétate de sodium.

3. Composition d'amélioration du sol suivant la revendication 1, caractérisée en ce que le degré d'inversion s'élève à environ 60-70 %.

4. Composition d'amélioration du sol suivant l'une des revendications précédentes, caractérisée en ce qu'elle se présente sous forme aqueuse et est à environ 0,01 à 1,0 % en poids, notamment à environ 0,1 % en poids en ce qui concerne l'association électrolyte pour le sol/sucre inverti.

5. Utilisation de la composition d'amélioration du sol selon l'une des revendications précédentes pour élever l'ionisation du sol et le rendement en plantes cultivées.
